# FASCICULE DE BREVET EUROPEEN

(11) **EP 2 841 342 B1**
(45) Date de publication et mention de la délivrance du brevet: **09.12.2015**
(21) Numéro de dépôt: 13723183.3
(22) Date de dépôt: 19.04.2013
(51) Int. Cl.: B65B 5/04, B65B 5/06, B65B 13/02, B65B 69/00, B65D 63/10, H02G 3/04

(54) **ENSEMBLE UNITAIRE STÉRILE POUR LA PRODUCTION DE PRODUITS BIOPHARMACEUTIQUES**
STERILES EINZELSET ZUR HERSTELLUNG VON BIOPHARMAZEUTISCHEN PRODUKTEN
STERILE INDIVIDUAL SET FOR PRODUCING BIOPHARMACEUTICAL PRODUCTS

(30) Priorité: 24.04.2012 FR 1253774
(43) Date de publication de la demande: 04.03.2015
(73) Titulaire: SARTORIUS STEDIM FMT SAS, 13400 Aubagne (FR)
(72) Inventeur: MENDYK, Nicolas, F-13124 Peypin (FR)
(74) Mandataire: Derambure Conseil
(86) Numéro de dépôt international: PCT/FR2013/050872
(87) Numéro de publication internationale: WO 2013/160594

(56) Documents cités:
- EP-A1- 1 360 121
- FR-A1- 2 956 092
- US-A- 5 284 003
- , XP002689925, Extrait de l'Internet: URL:http://www.jbg-metafix.com/gaineflash/ Fiche%20recto%20verso%20gene.pdf [extrait le 2013-01-09]
- Viard: "Traitement plasma et caractérisations de surfaces des silicones", , XP002689924, Extrait de l'Internet: URL:http://www.materiatech-carma.net/html/ pdf/clubmat23%20coating%20plasma.pdf [extrait le 2013-01-09] cité dans la demande

## Description

L'invention concerne le domaine technique de la production de produits biopharmaceutiques.

L'invention vise, selon un premier aspect, un ensemble unitaire stérile destiné à être utilisé dans le processus de fabrication d'un produit biopharmaceutique.

L'invention vise, selon un deuxième aspect, un procédé de conditionnement d'un ensemble unitaire stérile destiné à être utilisé lors de la fabrication d'un produit biopharmaceutique.

L'invention vise, selon un troisième aspect, un procédé de déconditionnement d'un ensemble unitaire stérile destiné à être utilisé lors de la fabrication d'un produit biopharmaceutique.

Il est constant dans le domaine biopharmaceutique d'utiliser des ensembles unitaires stériles comprenant une poche flexible stérile dotée d'une paroi périphérique définissant un espace interne stérile à l'intérieur duquel est disposé un ou plusieurs organe(s) fonctionnel(s) de type fluidique tels que des récipients, tubes ou ports, intégrés à des ensembles plus ou moins complexes pouvant comprendre plusieurs récipients, tubes, et moyens fonctionnels, éventuellement associés les uns avec les autres.

Par convention, il convient d'entendre par produit biopharmaceutique, un fluide issu de la biotechnologie - milieux de cultures, cultures cellulaires, solutions tampon, liquides de nutrition artificielle - ou un fluide pharmaceutique ou plus généralement un fluide destiné à être utilisé dans le domaine médical.

Dans le domaine technique de la production biopharmaceutique, il est connu de l'art antérieur différentes solutions visant à répondre aux problématiques du maintien ordonné et organisé d'organes fonctionnels de type fluidique dans l'espace interne stérile d'une poche flexible, afin de faciliter et d'accélérer la préhension et l'utilisation de ces organes fonctionnels lors de la fabrication des produits biopharmaceutiques.

Notamment, un ensemble unitaire stérile selon le préambule de la revendication 1 est connu de l'homme du métier par l'exemple qu'en donne le document FR-A1-2 956 092. En effet, ce document décrit un ensemble unitaire stérile comprenant une poche pourvue d'une paroi périphérique délimitant un espace interne stérile à l'intérieur duquel est disposé un organe fonctionnel correspondant, par exemple, à un moyen de distribution. Ce moyen de distribution présente plusieurs conduits de communication également disposés dans l'espace interne stérile de la poche et capables d'assurer le transfert fluidique stérile de composants fluidiques lors de la fabrication d'un produit biopharmaceutique. Afin d'assurer l'organisation et de faciliter la manipulation de ces conduits de communication à l'intérieur de l'espace interne stérile, l'ensemble unitaire stérile décrit par le document FR-A1-2 956 092 comporte des moyens d'association structurelle aptes à maintenir une partie des conduits de communication en position les uns contre les autres de manière à constituer un fagot de conduits de communication. Plus particulièrement, ces moyens d'association structurelle sont constitués par des lanières d'épaisseur restreinte et refermées sur elles-mêmes de manière à former des colliers de serrage permettant de constituer un fagot de conduits de communication.

Toutefois, une telle réalisation présente plusieurs inconvénients. Notamment, du fait de la composition des conduits de communication, d'une part, et de la paroi périphérique de la poche flexible, d'autre part, des efforts de frottement sont générés entre les conduits de communication et la paroi périphérique lors de l'introduction ou bien lors de l'extraction du fagot de conduits de communication dans ou depuis l'espace interne stérile de la poche flexible. Ces efforts de frottement ont pour effet de gêner l'opérateur lors de la manipulation du fagot de conduits de communication et, donc, de retarder les phases d'introduction ou d'extraction de l'organe fonctionnel stérile dans ou depuis la poche flexible. En outre, ces efforts de frottement génèrent, sur la paroi périphérique de la poche flexible, des tensions susceptibles d'altérer cette dernière, ce qui augmente les risques d'aboutir à une perte d'étanchéité dans l'espace interne stérile de la poche flexible.

L'une des solutions envisagées pour écarter ces problématiques d'adhérence consiste à procéder à un traitement de surface permettant de réduire les efforts de frottement de la face externe des conduits de communication contre la paroi périphérique. Ainsi, la publication « Traitement plasma et caractérisations de surface des silicones » (J. VIARD) disponible sur Internet prévoit-elle d'effectuer un plasma fluoré pour déposer une fine couche fluorée sur la surface externe de tubes en silicone et réduire ainsi leur force d'adhésion.

Toutefois, une telle solution entraîne des modifications dans la composition des tubes de communication. Cela engendre des problématiques de qualification pour la fabrication de produits biopharmaceutique et oblige à réaliser un traitement de surface qui complexifie de manière importante leur fabrication et engendre, de ce fait, des surcoûts de production ainsi que des problématiques d'approvisionnement.

Dans un domaine technique totalement différent de la production biopharmaceutique, tel que celui de la manutention de câbles électriques, il est connu de l'art antérieur des moyens d'association structurelle formés par des gaines spiralées flexibles. À titre d'exemple illustratif, une telle réalisation de gaine spiralée flexible est commercialisée sous la marque Pro-Tec-To Wrap® et vise à fournir une protection à la fois flexible et résistante des câbles électriques qui sont enserrés les uns contre les autres.

En revanche, il n'a jamais été envisagé d'utiliser de telles gaines spiralées pour constituer un fagot de conduits de communication fluidique dans le domaine technique de la production biopharmaceutique, ni d'employer de telles gaines spiralées flexibles pour limiter - voir supprimer - l'adhérence d'un tel fagot de conduits de communication contre une paroi périphérique de poche flexible.

Dans ce contexte, la présente invention a pour but de proposer un ensemble unitaire stérile destiné à être utilisé dans le processus de fabrication d'un produit biopharmaceutique et qui soit exempt de l'une au moins des limitations précédemment évoquées.

Plus particulièrement, et selon l'un de ses aspects, l'invention vise à fournir un ensemble unitaire stérile destiné à être utilisé lors de la fabrication d'un produit biopharmaceutique et permettant d'organiser et d'ordonner l'agencement d'un organe fonctionnel stérile dans l'espace interne stérile d'une poche flexible tout en facilitant la manipulation de l'organe fonctionnel stérile en vue de sa manipulation dans l'espace interne stérile.

À cette fin, l'invention vise selon un premier aspect un ensemble unitaire stérile destiné à être utilisé dans le processus de fabrication d'un produit biopharmaceutique, comprenant une poche flexible stérile dotée d'une paroi périphérique définissant un espace interne stérile et un organe fonctionnel de type fluidique au moins partiellement disposé dans l'espace interne stérile. L'organe fonctionnel comprend un ou plusieurs conduit(s) de communication disposé(s) dans l'espace interne stérile, apte(s) à assurer le transfert fluidique stérile de composants fluides et présentant une surface externe à plus forts coefficients de frottement statique et dynamique. L'ensemble unitaire stérile comprend également des moyens d'association structurelle disposés dans l'espace interne stérile et aptes à maintenir plusieurs portions à fagoter du ou des conduit(s) de communication en position les unes à proximité des autres de manière à constituer un fagot de conduit(s) de communication formant une unité structurelle manipulable en tant que telle. Les moyens d'association structurelle qui sont agencés autour et disposés le long du fagot de conduit(s) de communication présentent une surface externe à plus faibles coefficients de frottement statique et dynamique vis-à-vis de la paroi périphérique de la poche flexible que la surface externe de l'un ou plusieurs conduit(s) de communication de l'organe fonctionnel, de manière à faciliter la manipulation de l'organe fonctionnel par glissement dudit fagot de conduit(s) de communication sur la paroi periphérique

Grâce à cet agencement, les moyens d'association structurelle combinent deux fonctions. Ils permettent, d'une part, d'assurer la cohésion structurelle du fagot de conduit(s) de communication et, d'autre part, de faciliter le glissement de ce fagot de conduit(s) de communication vis-à-vis de la paroi périphérique. Par conséquent, cette réalisation a pour effet de faciliter la manipulation dudit fagot de conduit(s) de communication lors de la manipulation de l'organe fonctionnel à l'intérieur de la poche flexible. Il en résulte également une diminution des efforts de frottement générés par les conduits de communication sur la paroi périphérique ce qui restreint l'apparition de tensions sur la paroi périphérique de la poche flexible ainsi que les risques de perte d'étanchéité qui y sont associés. De manière générale, cette réalisation permet donc de simplifier, d'accélérer et de sécuriser la manipulation - notamment, l'introduction et l'extraction - de l'organe fonctionnel à l'intérieur de la poche flexible.

Selon une réalisation, les moyens d'association structurelle présentent au moins un tronçon élémentaire ouvert ou fermé et élastiquement déformable de sorte à enserrer les portions à fagoter du ou des conduit(s) de communication. L'intérêt de tels tronçons élémentaires élastiquement déformables consiste à autoriser, simplement et à partir de même moyens d'association structurelle, la formation de fagots de conduit(s) de communication de dimensions variables. En outre, l'utilisation de tronçons élémentaires ouverts permet de simplifier et d'accélérer la constitution des fagots de conduit(s) de communication tandis que l'utilisation de tronçons élémentaires fermés limite les risques de désolidarisation des conduits de communication formant un fagot.

Plus particulièrement, selon une réalisation, les moyens d'association structurelle présentent une pluralité de tronçons élémentaires disposés de manière discontinue le long du fagot de conduit(s) de communication, tel que deux tronçons élémentaires successifs sont espacés dans la direction longitudinale du fagot de conduit(s) de communication d'une distance maximale prédéterminée de manière à sensiblement annihiler les effets de frottement dynamique entre le fagot de conduit(s) de communication et la paroi périphérique de la poche flexible stérile. Il n'est donc pas nécessaire de positionner les moyens d'association structurelle de manière continue sur tout le long du fagot de conduit(s) de communication, ce qui permet, d'une part, de restreindre l'utilisation de moyens d'association structurelle ainsi que les, coûts de production correspondants et, d'autre part, d'accélérer l'étape de constitution du fagot de conduit(s) de communication.

Selon une réalisation, les moyens d'association structurelle sont formés par une ou plusieurs gaine(s) spiralée(s) flexible(s) présentant une succession de spires réparties le long du fagot de conduit(s) de communication. De cette façon, les moyens d'association structurelle sont à la fois modulaires et sécurisants puisque les spires de la gaine spiralée flexible sont capables de se déformer élastiquement pour enserrer différentes dimensions de fagots de conduit(s) de communication sans risquer de laisser s'échapper une partie des portions à fagoter du ou des conduit(s) de communication.

Dans ce cas, selon une réalisation, les moyens d'association structurelle sont formés par une unique gaine spiralée flexible disposée de manière continue le long du fagot de conduit(s) de communication. Les risques d'adhérence du fagot de conduit(s) de communication contre la paroi périphérique de la poche flexible sont ainsi maîtrisés de manière continue, sur tout le long de ce fagot de conduit(s) de communication.

À l'inverse, selon une réalisation alternative, les moyens d'association structurelle sont formés par plusieurs gaines spiralées flexibles disposées de manière discontinue le long du fagot de conduit(s) de communication, tel que deux gaines spiralées flexibles successives sont espacées dans la direction longitudinale d'une distance maximale prédéterminée de manière à sensiblement annihiler les effets de frottement dynamique entre le fagot de conduit(s) de communication et la paroi périphérique de la poche flexible.

Dans ce cas, selon une réalisation, la distance maximale de séparation de deux gaines spiralées flexibles successives est d'environ 20 centimètres, ce qui permet de limiter la longueur des gaines spiralées flexibles tout en supprimant la majeure partie des effets de frottement dynamique.

Par ailleurs, selon une réalisation, chacune des gaines spiralées flexibles présente, lorsqu'elle se trouve en position autour du fagot de conduit(s) de communication, une longueur minimale d'environ 10 centimètres dans la direction longitudinale, ce qui limite le nombre de pièces à assembler et simplifie donc l'opération de constitution du fagot de conduit(s) de communication.

D'autre part, selon une réalisation, les gaines spiralées flexibles présentent des caractéristiques structurelles identiques, ce qui simplifie leur d'approvisionnement.

Selon une réalisation, deux spires successives de la ou des gaine(s) spiralée(s) flexible(s) sont espacées dans la direction longitudinale d'une distance maximale d'environ 4 centimètres. Cela permet ainsi de limiter les risques de contact de la paroi périphérique avec les conduits de communication positionnés entre deux spires successives de la même gaine spiralée flexible.

Dans ce cas, selon une autre réalisation, la ou l'une au moins des gaine(s) spiralée(s) flexible(s) présente(nt), d'une part, une portion médiane enroulée autour de l'ensemble des portions à fagoter du fagot de conduits de communication et, d'autre part, au moins une partie extrême enroulée uniquement autour d'une portion à fagoter de l'un des conduits de communication formant le fagot de conduits de communication. Dans la mesure où la partie extrême des gaines spiralées flexibles peut, parfois, s'avérer tranchant, un tel agencement permet de limiter les risques de dégradation des conduits de communication tout en assurant une constitution à la fois simple et efficace du fagot de conduit(s) de communication.

Selon une réalisation, l'ensemble unitaire comprend plusieurs moyens d'association structurelle distincts et indépendants, les uns étant aptes à maintenir plusieurs portions à fagoter du ou des conduit(s) de communication de manière à constituer un premier fagot de conduit(s) de communication manipulable en tant que tel, les autres étant aptes à maintenir plusieurs autres portions à fagoter du ou des conduit(s) de communication de manière à constituer un second fagot de conduit(s) de communication manipulable en tant que tel et indépendamment du premier fagot de conduit(s) de communication.

Selon un deuxième aspect, l'invention concerne également un procédé de conditionnement ou de déconditionnement d'un ensemble unitaire selon la revendication 13. L'invention consiste à utiliser des moyens d'association structurelle présentant une surface externe à plus faibles coefficients de frottement statique et dynamique pour constituer le fagot de conduit(s) de communication de sorte à faciliter l'introduction ou l'extraction de l'organe fonctionnel dans ou depuis la poche flexible par glissement dudit fagot de conduit(s) de communication vis-à-vis de la paroi périphérique de la poche flexible. La manipulation de l'organe fonctionnel lorsqu'il se trouve à l'intérieur de la poche flexible s'en trouve ainsi largement facilité. Notamment, les étapes d'introduction de l'organe fonctionnel dans la poche flexible ou d'extraction dudit organe fonctionnel depuis la poche flexible sont plus rapides et risquent moins de dégrader la paroi flexible de l'ensemble unitaire.

Selon un aspect, l'invention concerne un procédé de conditionnement selon la revendication 14. Elle concerne alors un procédé de conditionnement d'un ensemble unitaire destiné à être utilisé dans le processus de fabrication d'un produit biopharmaceutique, comprenant une pluralité d'étapes consistant à : disposer d'une poche flexible apte à être stérilisée et dotée d'une paroi périphérique définissant un espace interne stérile; disposer d'un organe fonctionnel de type fluidique comprenant un ou plusieurs conduit(s) de communication aptes, d'une part, à assurer le transfert fluidique stérile de composants fluides et présentant, d'autre part, une surface externe à plus forts coefficients de frottement statique et dynamique. Le procédé de conditionnement comporte alors une étape consistant à agencer autour et à répartir le long d'une ou plusieurs portion(s) à fagoter du ou des conduit(s) de communication des moyens d'association structurelle présentant une surface externe à plus faibles coefficients de frottement statique et dynamique que la surface externe de l'un ou plusieurs conduit(s) de communication de l'organe fonctionnel, de manière à constituer un fagot de conduit(s) de communication, puis une étape additionnelle consistant à introduire l'organe fonctionnel dans la poche flexible, par glissement du fagot de conduit(s) de communication vis-à-vis de la paroi périphérique de la poche flexible. Enfin la poche est scellée hermétiquement avant la stérilisation de son contenu, par irradiation par exemple.

Dans ce cas, selon une réalisation, les moyens d'association structurelle sont formés par une ou plusieurs gaine(s) spiralée(s) flexible(s) présentant une succession de spires réparties le long du fagot de conduits de communication tel que deux spires successives sont espacées dans la direction longitudinale d'une distance maximale prédéterminée de manière à sensiblement annihiler les effets de frottement dynamique entre le fagot de conduit(s) de communication et la paroi périphérique de la poche flexible.

Plus particulièrement, la constitution du fagot de conduits de communication comprend plusieurs étapes consistant, d'abord, à enrouler l'une des parties extrêmes de la ou de l'une au moins des gaine(s) spiralée(s) flexible(s) uniquement autour de l'une des portions à fagoter de l'un des conduits de communication, ensuite, à enrouler une partie médiane de la ou de l'une au moins des gaine(s) spiralée(s) flexible(s) autour de l'ensemble des conduits de communication de sorte à constituer le fagot de conduits de communication, et enfin, à enrouler l'autre des parties extrêmes de la ou de l'une au moins des gaine(s) spiralée(s) flexible(s) uniquement autour de l'une des portions à fagoter de l'un des conduits de communication formant le fagot de conduits de communication.

Selon un aspect, l'invention concerne ainsi un procédé de déconditionnement selon la revendication 17. Elle concerne ainsi un procédé de déconditionnement d'un ensemble unitaire utilisé dans le processus de fabrication d'un produit biopharmaceutique, comprenant une pluralité d'étapes consistant à : disposer d'une poche flexible stérile dotée d'une paroi périphérique définissant un espace interne stérile dans lequel est au moins partiellement agencé un organe fonctionnel de type fluidique comprenant un ou plusieurs conduit(s) de communication aptes à assurer le transfert fluidique stérile de composants fluides et présentant une surface externe à plus forts coefficients de frottement statique et dynamique. Le procédé de déconditionnement consiste en ce que l'organe fonctionnel comporte également des moyens d'association structurelle qui, d'une part, sont agencés autour et répartis le long d'une ou plusieurs portion(s) à fagoter du ou des conduit(s) de communication de sorte constituer un fagot de conduits de communication facilitant leur manipulation et qui, d'autre part, présentent une surface externe à plus faibles coefficients de frottement statique et dynamique que la surface externe de l'un ou plusieurs conduit(s) de communication de l'organe fonctionnel ; et en ce qu'il présente une étape additionnelle consistant à extraire l'organe fonctionnel de la poche flexible, par glissement du fagot de conduit(s) de communication vis-à-vis de la paroi périphérique de ladite poche flexible.

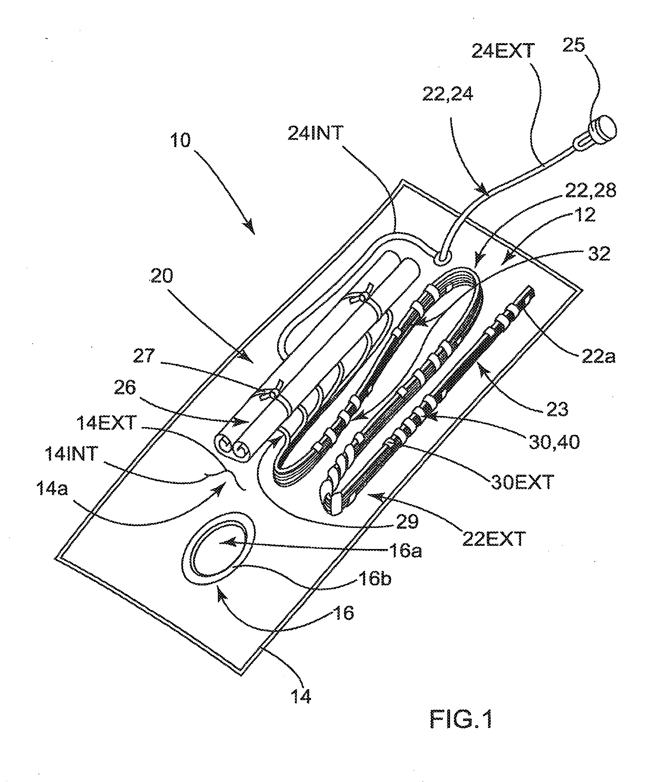

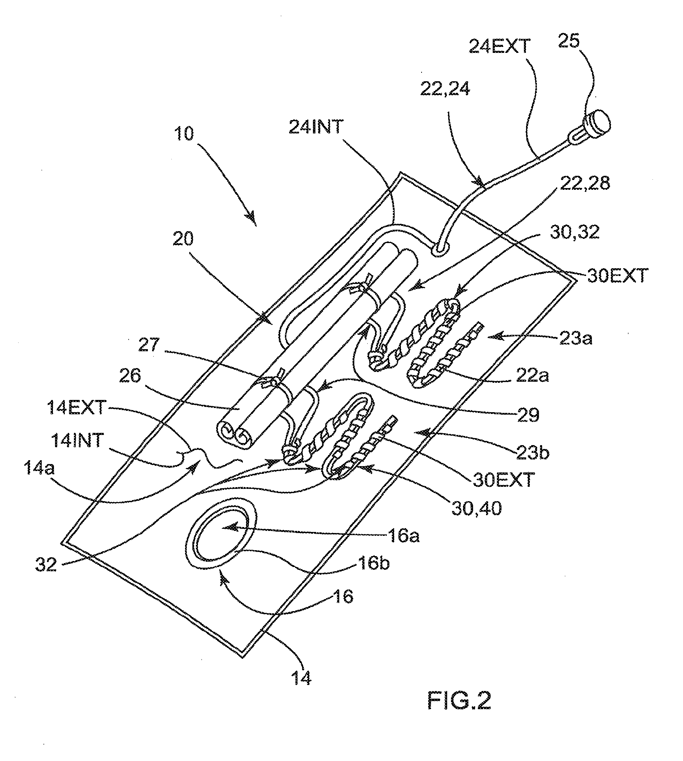

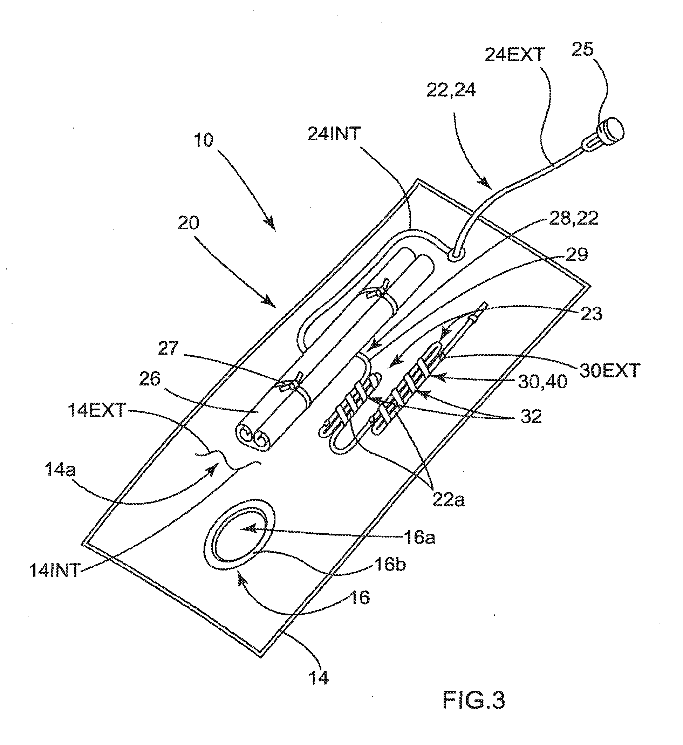

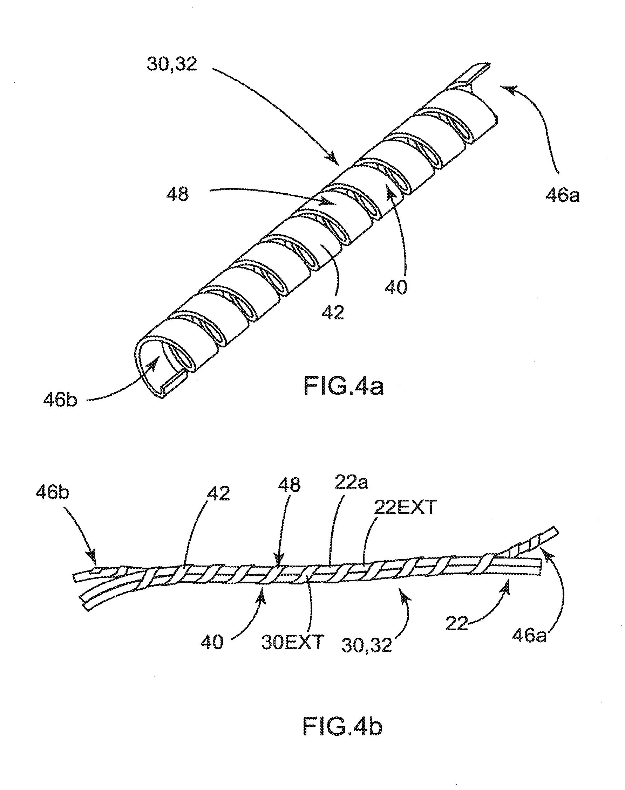

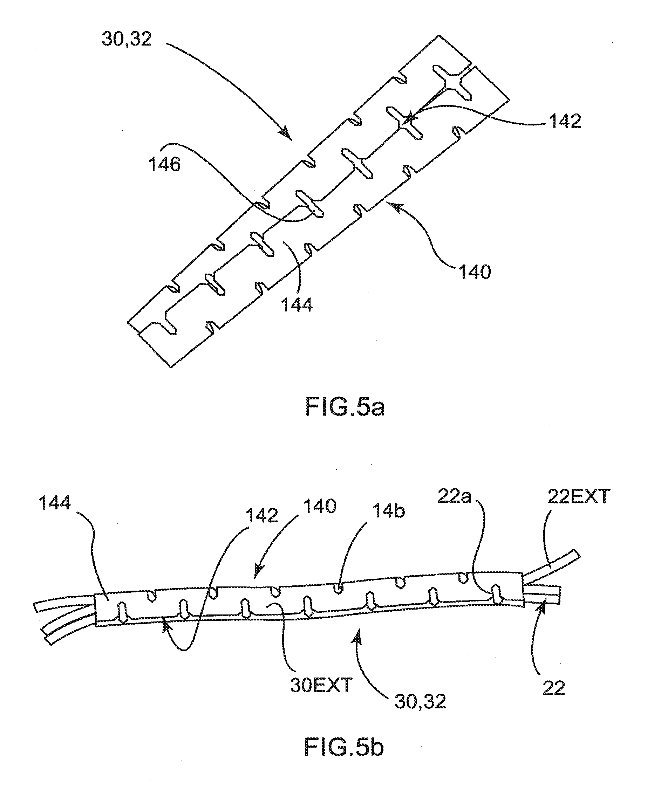

D'autres caractéristiques et avantages de l'invention ressortiront clairement de la description qui en est faite ci-après, à titre indicatif et nullement limitatif, en référence aux dessins annexés, dans lesquels :
▪ La figure 1 est une vue générale, en perspective, d'un premier mode de réalisation d'un ensemble unitaire stérile selon l'invention comprenant une poche flexible stérile dans laquelle est disposé un organe fonctionnel doté d'une pluralité de conduits de communication fluidique dont certains sont regroupés en un fagot de conduits de communication par l'intermédiaire de moyens d'association structurelle constitués de plusieurs gaines spiralées flexibles ;
▪ La figure 2 est une vue générale, en perspective, d'un deuxième mode de réalisation d'un ensemble unitaire stérile selon l'invention comprenant une poche flexible stérile dans laquelle est disposé un organe fonctionnel doté d'une pluralité de conduits de communication fluidique, deux d'entre eux étant regroupés en un premier fagot de conduits de communication par l'intermédiaire de moyens d'association structurelle formés par plusieurs gaines spiralées flexibles, deux autres étant regroupés en un second fagot de conduits de communication distinct et indépendant par l'intermédiaire d'autres moyens d'association structurelle ;
▪ La figure 3 est une vue générale, en perspective, d'un troisième mode de réalisation d'un ensemble unitaire stérile selon l'invention comprenant une poche flexible stérile dans laquelle est disposé un organe fonctionnel doté d'un conduit de communication fluidique présentant plusieurs portions à fagoter regroupées en un fagot de conduit de communication par l'intermédiaire de moyens d'association structurelle constitués de plusieurs gaines spiralées flexibles ;
▪ La figure 4a est une vue de détail, en perspective, d'un premier exemple de réalisation de moyens d'association structurelle susceptibles d'appartenir à un ensemble unitaire selon l'invention, formé en l'espèce par une gaine spiralée flexible ;
▪ La figure 4b est une vue de détail, en perspective, d'un fagot de trois conduits de communication maintenu par l'intermédiaire du premier exemple de moyens d'association structurelle illustrés sur la figure 4a ;
▪ La figure 5a est une vue de détail, en perspective, d'un deuxième exemple de réalisation de moyens d'association structurelle susceptibles d'appartenir à un ensemble unitaire selon l'invention, formé en l'espèce par une gaine flexible ouverte présentant une ouverture longitudinale ; et
▪ La figure 5b est une vue de détail, en perspective, d'un fagot de trois conduits de communication maintenu par l'intermédiaire du deuxième exemple de moyens d'association structurelle illustrés sur la figure 5a.

L'invention s'applique au domaine technique de la production biopharmaceutique.

Plus particulièrement, l'invention vise à fournir des ensembles unitaires stériles 10 utilisables dans le cadre de la fabrication de produits biopharmaceutiques.

Dans la suite de la description, les propriétés d'adhérence des éléments formant l'ensemble unitaire stérile 10 sont importantes et participent à la définition de l'invention. Pour plus de clarté, il convient donc de rappeler que le terme « d'adhérence » se rapporte aux efforts de frottement - également nommés efforts de friction - s'exerçant entre deux surfaces en contact l'une avec l'autre et qui s'opposent à leurs mouvements tangentiels relatifs. Plus particulièrement, l'adhérence d'une surface est caractérisée par les coefficients de frottement statiques et dynamiques du matériau qui la compose. Plus le coefficient de frottement statique d'un matériau est élevé, plus le niveau d'adhérence d'une surface formée à partir de ce matériau sera élevé lorsque cette surface se trouve au repos. De la même manière, plus le coefficient de frottement dynamique d'un matériau est élevé, plus le niveau d'adhérence d'une surface formée à partir de ce matériau sera élevé lorsque cette surface se trouve en mouvement.

Dans la description qui suit, les éléments à plus forts coefficients de frottement statique et dynamique - considérés comme des éléments à plus forte adhérence - seront qualifiés comme tel en comparaison avec des éléments à plus faibles coefficients de frottement statique et dynamique - considérés comme des éléments à plus faible adhérence. Ces deux notions sont donc à interpréter de manière relative.

Plusieurs modes de réalisation d'ensembles unitaires stériles 10 selon l'invention sont décrits en référence aux figures 1, 2 et 3.

De tels ensembles unitaires stériles 10 comprennent, d'abord, une poche flexible 12.

Cette poche flexible 12 présente une paroi périphérique 14 qui délimite un espace interne stérile 14a dont la contenance peut varier dans une large mesure.

La poche flexible 12 vise donc à contenir, dans l'espace interne stérile 14a, des éléments qui n'ont pas été exposés à l'air ambiant - ou plus généralement à un environnement dégradé - et qui ne sont donc pas contaminés de sorte qu'ils peuvent être utilisés sans risque pour la fabrication de produits biopharmaceutiques. À cet égard, la structure de la poche flexible 12 permet d'assurer et de maintenir une étanchéité suffisante pour ne pas contaminer l'espace interne stérile 14a.

Pour ce faire, la paroi périphérique 14 de la poche flexible 12 peut, par exemple, être formée d'un film simple réalisé à partir d'un matériau polymère assurant efficacement l'étanchéité de l'espace interne stérile 14a. Notamment, la paroi périphérique 14 peut ainsi être réalisée en polyamide (PA), en polyéthylène (PE), en polypropylène (PP) ou analogue. Selon une autre réalisation, la paroi périphérique 14 de la poche flexible 12 peut être formée d'un film complexe constitué de plusieurs couches de matériaux distincts assurant également l'étanchéité de l'espace interne stérile 14a.

À titre d'exemple non limitatif, la paroi périphérique 14 peut alors présenter une surface interne 14_{INT} réalisée en polyamide (PA), en polyéthylène (PE), en polypropylène (PP) ou bien tout matériau analogue et, éventuellement, une ou plusieurs autres couches fonctionnelles externes susceptibles d'être réalisées dans d'autres matériaux, selon les spécificités techniques recherchées.

Selon les réalisations des figures 1, 2 et 3, la paroi périphérique 14 est pourvue d'une porte 16 associée à une ouverture 16a formée dans la paroi périphérique 14.

La porte 16 peut, le cas échéant, être complémentaire d'une porte aménagée dans une enceinte stérile (non représentées) où seront - par exemple - fabriqués les produits biopharmaceutiques.

La porte 16 inclut une bride 16b amovible pouvant être associée à l'enceinte stérile, grâce à des moyens d'association et des moyens de manoeuvre prévus à cet effet. De tels moyens d'association et de tels moyens de manoeuvre peuvent comprendre des systèmes à ergots et gorges complémentaires, à cames et leviers ou analogue, par exemple. Ainsi, la poche flexible 12 et l'ensemble unitaire stérile 10 peuvent eux-mêmes être associés de façon rigide et amovible à l'enceinte, la porte 16 de la poche flexible 12 venant en correspondance avec la porte de l'enceinte stérile.

La porte 16 inclut également un vantail (non représenté) mobile entre un état fermé où il coopère de façon complémentaire avec la bride 16b en fermant l'ouverture 16a et un état ouvert où il est dégagé de la bride 16b en laissant ouverte l'ouverture 16a. Il est prévu des moyens de manoeuvre de la porte de l'enceinte stérile, pouvant comprendre des articulations, des leviers, des moteurs ou analogue, par exemple. Il est également prévu des moyens d'association rigide et amovible du vantail de la poche flexible 12 sur la porte de l'enceinte, de manière à permettre la communication de l'espace interne stérile 14a de la poche flexible 12 stérile avec l'intérieur de l'enceinte. De cette manière, il est possible d'opérer un transfert de l'un à l'autre, soit pour introduire quelque chose qui se trouvait dans l'espace interne stérile 14a de la poche flexible 12 vers l'intérieur de l'enceinte stérile, soit pour évacuer quelque chose qui se trouvait à l'intérieur de l'enceinte et l'amener de l'espace interne stérile 14a de le poche flexible 12. Cette association de la poche flexible 12 avec l'enceinte est réalisée de manière stérile, de sorte que le transfert d'introduction ou d'évacuation dont il est question soit lui-aussi stérile.

Il convient de signaler que l'exemple illustré par les figures 1, 2 et 3 présente une porte 16 et une ouverture 16a selon un mode de réalisation particulier décrit dans le document EP-A1-0 688 020 incorporé par référence. Toutefois, d'autres modes de réalisation alternatifs permettent également d'aboutir à une poche flexible 12 présentant une paroi périphérique 14 définissant un espace interne stérile 14a.

À titre exemplatif et non limitatif, il serait possible d'envisager que la paroi périphérique 14 soit réalisée d'un seul tenant et entièrement refermée sur elle-même pour définir l'espace interne stérile 14a.

L'ensemble unitaire stérile 10 selon l'invention comprend, aussi, un ou plusieurs organes fonctionnels 20.

L'un au moins de ces organes fonctionnels 20 est de type fluidique stérile, c'est-à-dire qu'il est destiné à assurer une communication fluidique, sans perte d'étanchéité, dans le cadre du processus de fabrication des produits biopharmaceutiques.

Selon les réalisations des figures 1, 2 et 3, l'ensemble unitaire stérile 10 comporte un organe fonctionnel 20 constitué de plusieurs conduits de communication 22 destinés à assurer le transfert fluidique stérile. Selon une réalisation, ces conduits de communication 22 sont - de par leur nature et leur fonction - plutôt souples mais conserve une certaine rigidité permettant de faciliter leur manipulation et leur installation dans la poche flexible 12 ainsi que lors de la fabrication des produits biopharmaceutiques.

Plus particulièrement, l'organe fonctionnel 20 présente un conduit de communication 22 formant un tronçon de communication amont 24, également nommé tronçon de franchissement. En effet, ce tronçon de communication amont 24 traverse la paroi périphérique 14 de manière stérile et présente une portion extérieure 24_{EXT} située à l'extérieur de l'espace interne stérile 14a et une portion intérieure 24_{INT} située à l'intérieur de cet espace interne stérile 14a. L'extrémité de la portion extérieure 24_{EXT} comprend, par ailleurs, un connecteur aseptique 25 permettant, d'une part, d'obturer la portion extérieure 24_{EXT} pour éviter toute contamination extérieure et, d'autre part, d'assurer une connexion stérile avec un autre élément situé à l'extérieur de la poche flexible 12. À titre exemplatif et non limitatif, ce connecteur aseptique 25 peut correspondre au produit Opta® commercialisé par la société Sartorius Stedim Biotech. Le tronçon de communication amont 24 est donc destiné à assurer un transfert fluidique stérile entre l'extérieur et l'intérieur de la poche flexible 12.

L'organe fonctionnel 20 présente également un conteneur flexible 26 placé dans l'espace interne stérile 14a. En particulier, le conteneur flexible 26 est en communication fluidique avec la portion intérieure 24_{INT} du tronçon de communication amont 24 afin de permettre le passage de composants fluides de l'un à l'autre. À cet égard, ladite portion intérieure 24_{INT} du tronçon de communication amont 24 peut être connectée au conteneur flexible 26 par soudage, collage ou bien par l'intermédiaire d'un connecteur ou bien encore par tout autre moyen d'association stérile approprié. Le conteneur flexible 26 est, ici, replié sur lui-même par l'intermédiaire de colliers de serrage 27, afin de minimiser son encombrement dans l'espace interne stérile 14a de la poche flexible 12.

L'organe fonctionnel 20 présente également une pluralité de conduits de communication 22 formant des tronçons de communication aval 28. Les tronçons de communication aval 28 sont également positionnés dans l'espace interne stérile 14a de la poche flexible 12. Ils sont en outre en communication fluidique avec le conteneur flexible 26 pour assurer le transfert de composants fluidiques du conteneur flexible 26 jusqu'aux aux tronçons de communication aval 28 et *vice-versa.* Là encore, les tronçons de communication aval 28 peuvent être connectés au conteneur flexible 26 par l'intermédiaire de tout moyen d'association stérile approprié, tel que le soudage, le collage ou bien l'utilisation de connecteurs ou analogue.

Selon les exemples de réalisation des figures 1, 2 et 3, l'ensemble unitaire stérile 10 comprend donc un organe fonctionnel 20 composé de plusieurs conduits de communication 22 et d'un conteneur intérieur souple 26. Toutefois, selon des réalisations alternatives, il serait également possible qu'un ensemble unitaire stérile 10 selon l'invention comprenne plusieurs organes fonctionnels 20 distincts et différents. Selon les cas, il peut, par exemple, s'agir de moyens de communication choisis dans le groupe comprenant les tuyaux, tubes, conduits et analogue. Il peut aussi s'agir de moyens de distribution, typiquement choisis dans le groupe comprenant les pompes et analogue. Il peut également s'agir d'organes d'emplissage, choisis dans le groupe comprenant les aiguilles d'injection, les buses et analogue. Il peut, en outre, s'agir de moyens de filtration, de moyens de stockage tampon, de moyens de connexion, etc. Bien entendu, cette liste n'est pas exhaustive et les termes « organe fonctionnel » peuvent se rapporter à d'autres éléments susceptibles utilisés dans la production biopharmaceutique.

L'organe fonctionnel 20 présente ainsi plusieurs conduits de communication 22.

Il convient d'entendre par directions longitudinales des conduits de communication 22, les directions d'épanouissement - courbe ou rectiligne - des conduits de communication 22.

Selon une réalisation, les conduits de communication 22 sont réalisés à partir d'une couche de matériaux permettant d'assurer la perméabilité des transferts fluidiques. Ils peuvent, à ce titre, être réalisés à partir de silicone, d'un éthylène-acétate de vinyle (EVA), d'un élastomère thermoplastique (TPE) ou d'autres matériaux analogues.

Mais les conduits de communication 22 peuvent également être formés à partir de plusieurs couches permettant d'assurer des fonctions distinctes de celle de l'étanchéité. Comme précédemment, la ou les couches interne 22_{INT} peuvent alors être formé dans différents types de matériaux selon la spécificité technique recherchée tandis que la couche externe 22_{EXT} peut être réalisée à partir de silicone, d'un éthylène-acétate de vinyle (EVA), d'un élastomère thermoplastique (TPE) ou d'autres matériaux analogues.

Les conduits de communication 22 présentent ainsi une surface externe 22_{EXT} dotée de coefficients de frottement statique et dynamique susceptibles d'engendrer une forte adhérence lors du contact des conduits de communication 22 avec la paroi périphérique 14 de la poche flexible 12. Par exemple, lorsque les conduits de communication 22 présente une surface externe 22a en silicone, ils adhérent facilement et de manière importante à la surface interne de la paroi périphérique 14 de la poche flexible 12.

L'ensemble unitaire stérile 10 selon l'invention comprend également des moyens d'association structurelle 30.

Ces moyens d'association structurelle 30 sont disposés dans l'espace interne stérile 14a et visent à maintenir, les unes contre les autres, plusieurs portions à fagoter 22a du ou des conduits de communication 22 de l'organe fonctionnel 20.

Plus particulièrement, pour simplifier la manipulation de l'organe fonctionnel 20 lorsque ce dernier se trouve dans l'espace interne stérile 14a, les moyens d'association structurelle 30 sont agencés pour rassembler les portions à fagoter 22a à proximité les unes des autres, de sorte à constituer un fagot 23 de conduits de communication 22.

Le fagot 23 de conduits de communication 22 forme alors une unité structurelle spécifique présentant une certaine rigidité, une certaine tenue et/ou une certaine organisation dans l'espace interne stérile 14a de la poche flexible 12, ce qui facilite sa manipulation.

Il convient alors d'entendre par direction longitudinale du fagot 23 de conduits de communication 22, la direction d'épanouissement - courbe ou rectiligne - de ce dernier.

Pour assurer l'association structurelle dudit fagot 23 de conduits de communication 22 tout en évitant les problèmes d'adhérence précités, les moyens d'association structurelle 30 sont agencés autour du fagot 23 de conduits de communication 22 et sont disposés le long dudit fagot 23 de conduits de communication 22. Par ailleurs, pour limiter l'adhérence du fagot 23 de conduits de communication 22 contre la paroi périphérique 14, les moyens d'association structurelle présentent une surface externe 30_{EXT} à plus faibles coefficients de frottement statique et dynamique que ceux de la surface externe 22_{EXT} des conduits de communication 22 de l'organe fonctionnel.

De cette manière, les contacts de la surface externe 22_{EXT} des conduits de communication 22 avec la surface interne 14_{INT} de la paroi périphérique 24 sont au moins partiellement limités au profit de contacts entre la surface externe 30_{EXT} des moyens d'association structurelle 30 et la paroi périphérique 14. Or, dans la mesure où les coefficients de frottement statique et dynamique de la surface externe 30_{EXT} des moyens d'association structurelle 30 sont plus faibles que ceux de la surface externe 22_{EXT} des conduits de communication 22, l'adhérence du fagot 23 de conduits de communication 22 contre la paroi périphérique 14 est limitée et sa manipulation donc facilitée.

Les moyens d'association structurelle 30 combinent alors deux fonctions : assurer la cohésion structurelle du fagot 23 de conduits de communication 22 et faciliter son glissement vis-à-vis de la paroi périphérique 14. De cette manière, les opérations de manipulation de l'organe fonctionnel 20 lorsqu'il se trouve au moins partiellement à l'intérieur de la poche flexible 12 sont aisées et les risques de dégradation de la poche flexible 12 sont limités.

De manière générale, il est utile que les moyens d'association structurelle 30 présentent au moins un tronçon élémentaire 32 élastiquement déformable. De cette façon, les moyens d'association structurelle 30 sont capables de se déformer et d'enserrer simplement et rapidement plusieurs typologies de fagots 23 de conduits de communication 22, malgré des variations dans le nombre ou les dimensions de portions à fagoter 22a.

Le tronçon élémentaire 32 peut, par ailleurs, être fermé sur lui-même, ce qui limite les risques de désolidarisation d'un fagot 23 de conduits de communication 22 ou bien au contraire ouvert, ce qui simplifie la mise en place des conduits de communication 22 dans les moyens d'association structurelle 30.

Le premier mode de réalisation de l'ensemble unitaire stérile 10 illustré par la figure 1 est maintenant décrit en détail.

Selon cette réalisation, l'organe fonctionnel 20 présente six conduits de communication 22, en l'espèce les tronçons de communication aval 28, regroupés en un seul et unique fagot 23 de conduits de communication 22. Ce fagot 23 de conduits de communication 22 s'étend le long d'une partie seulement des conduits de communication 22 puisque ces derniers présentent des parties extrêmes 29 libres, espacées les unes des autres et reliées au conteneur flexible 26.

Par ailleurs, les moyens d'association structurelle 30 sont formés par une pluralité de tronçons élémentaires 32 disposés de manière discontinue le long du fagot 23 de conduits de communication 22. Ainsi, les tronçons élémentaires 32 successifs sont, d'une part, agencés autour de différentes portions à fagoter 22a et sont, d'autre part, espacés les uns des autres d'une distance maximale prédéterminée, pouvant aller par exemple jusqu'à environ 20 centimètres ce qui permet d'assurer un glissement efficace du fagot 23 de conduits de communication 22 vis-à-vis de la paroi périphérique. Cet agencement permet de limiter la longueur des moyens d'association structurelle 30 à utiliser tout en supprimant la majeure partie des effets de frottement dynamique entre le fagot 23 de conduits de communication 22 et la paroi périphérique 14.

Bien entendu, la distance de séparation des tronçons élémentaires 32 formant les moyens d'association structurelle 30 pourrait être différente et varier d'un tronçon élémentaire 32 à l'autre. Il convient simplement qu'elle permette d'annihiler les effets de frottement dynamique entre le fagot 23 de conduits de communication 22 et la paroi périphérique 14.

Grâce à cette réalisation, il n'est donc pas nécessaire de positionner les moyens d'association structurelle 30 de manière continue sur tout le long du fagot 23 de conduits de communication 22, ce qui permet, d'une part, de restreindre l'utilisation de moyens d'association structurelle 30 ainsi que les coûts de production correspondants et, d'autre part, d'accélérer l'étape de constitution du fagot 23 de conduits de communication 22.

Cela étant, les moyens d'association structurelle 30 pourrait également être formés d'un seul tenant et disposés de manière continue sur tout le long du fagot 23 de conduits de communication 22 appartenant à l'ensemble unitaire stérile 10 de la figure 1.

Il convient par ailleurs de signaler que le fagot 23 de conduits de communication 22 est organisé dans l'espace interne stérile 14a de manière à éviter toute superposition de différentes portions à fagoter 22a. La préhension et la manipulation du fagot de conduits de communication est ainsi facilité.

Le deuxième mode de réalisation de l'ensemble unitaire stérile 10 illustré par la figure 2 est maintenant décrit en détail.

Selon ce deuxième mode de réalisation, l'organe fonctionnel 20 présente quatre conduits de communication 22, formant les tronçons de communication aval 28, regroupés en deux fagots 23 de conduits de communication 22 distincts, indépendants et regroupant chacun deux conduits de communication 22. Ces deux fagots 23 de conduits de communication 22 s'étendent le long d'une partie seulement des tronçons de communication aval 28 puisque ces derniers présentent des parties extrêmes 29 libres, espacées les unes des autres et reliées au conteneur flexible 26.

Le premier fagot 23b de conduits de communication 22 dispose de moyens d'association structurelle 30 formés par une pluralité de tronçons élémentaires 32. Ces derniers sont disposés de manière discontinue le long du premier fagot 23a de conduits de communication 22. Plus particulièrement, les tronçons élémentaires 32 successifs sont agencés autour de différentes portions à fagoter 22a et sont à nouveau espacés les uns des autres d'une distance maximale prédéterminée. La longueur des moyens d'association structurelle 30 utilisés est ainsi limitée mais la majeure partie des effets de frottement dynamique entre le premier fagot 23a de conduits de communication 22 et la paroi périphérique 14 sont, malgré tout, supprimés.

Le second fagot 23a de conduits de communication 22 dispose de moyens d'association structurelle 30 formés par un unique tronçon élémentaire 32 agencé autour des portions à fagoter 22a de chacun des conduits de communication 22. Cet unique tronçon élémentaire 32 s'étend, par ailleurs, sur tout le long du second fagot 23b de conduits de communication 22 de sorte que les risques d'adhérence contre la paroi périphérique 14 sont parfaitement maitrisés.

Par ailleurs et comme précédemment, les premier et second fagots 23a, 23b de conduits de communication 22 sont organisés dans l'espace interne stérile 14a de manière à éviter toute superposition et à faciliter leur préhension ainsi que leur manipulation.

Le troisième mode de réalisation de l'ensemble unitaire stérile 10 illustré par la figure 3 est maintenant décrit en détail.

Selon ce troisième mode de réalisation, l'organe fonctionnel 20 présente un seul et unique conduit de communication 22, formant le tronçon de communication aval 28. Ce conduit de communication 22 présente plusieurs portions à fagoter 22a regroupées en deux fagots 23 de conduit de communication 22 distincts.

Plus particulièrement, le conduit de communication 22 présente d'abord trois portions à fagoter 22a regroupées les unes à proximité des autres et maintenues dans cette position par l'intermédiaire d'un premier tronçon élémentaire 32 appartenant aux moyens d'association structurelle 30. Ensuite, ledit conduit de communication 22 présente trois autres portions à fagoter 22a distinctes et maintenues en position les unes à proximité des autres par l'intermédiaire d'un second tronçon élémentaire 32, distinct du premier tronçon élémentaire 32.

Il est à noter que les deux fagots 23 du conduit de communication 22 sont espacés les uns des autres d'une distance maximale prédéterminée, ce qui permet de supprimer la majeure partie des effets de frottement dynamique entre les fagots 23 du conduit de communication 22 et la paroi périphérique 14.

Comme précédemment, les fagots 23 du conduit de communication 22 sont organisés dans l'espace interne stérile 14a de manière à éviter toute superposition et à faciliter leur préhension ainsi que leur manipulation.

L'ensemble unitaire stérile 10 selon l'invention peut comprendre plusieurs formes de réalisation de moyens d'association structurelle 30.

Selon une première forme de réalisation illustrée par les figures 4a et 4b, les moyens d'association structurelle 30 sont formés par une gaine spiralée flexible 40 présentant une succession de spires 42 aptes à se déformer élastiquement pour enserrer et maintenir à proximité les unes des autres plusieurs portions à fagoter 22a appartenant à un ou plusieurs conduits de communication 22.

Selon cette réalisation, la gaine spiralée flexible 40 peut présenter une longueur variable et s'étendre dans la direction longitudinale du ou des conduits communication lorsqu'elle se trouve en position d'utilisation. La gaine spiralée flexible 40 est alors à même d'enserrer une partie au moins des portions à fagoter 22a de chacun des conduits de communication 22.

Une telle gaine spiralée flexible 40 est à la fois modulaire et sécurisante. En effet, d'une part, les spires 42 de la gaine spiralée flexible 40 sont capables de se déformer élastiquement pour enserrer différentes dimensions de fagots 23 de conduits de communication 22 et, d'autre part, compte-tenu de sa géométrie fermée la gaine spiralée flexible ne risque pas de laisser s'échapper un ou plusieurs conduits de communication 22.

En outre, la gaine spiralée flexible 40 est formée à partir d'un matériau présentant des coefficients de frottement statique et dynamique inférieurs à ceux des conduits de communications 20. À titre exemplatif et nullement limitatif, ladite gaine spiralée flexible 40 présente, selon une réalisation, une couche externe réalisée en polypropylène (PP) ou tout autre matériau analogue.

De cette manière, lorsque la gaine spiralée flexible 40 est en position autour des portions à fagoter 22a du fagot 23 de conduits de communication 22, c'est elle qui entre majoritairement en contact avec la paroi périphérique 14 et qui assure donc un meilleur glissement du fagot 23 de conduits de communication 22.

Comme indiqué précédemment, les moyens d'association structurelle 30 peuvent être formé par un unique tronçon élémentaire 32 formant une unique gaine spiralée flexible 40 disposée de manière continue le long du fagot 23 de conduits de communication 22. C'est ce qu'illustre la figure 4b. Les risques d'adhérence du fagot 23 de conduits de communication 22 contre la paroi périphérique 14 de la poche flexible 12 sont ainsi maîtrisés, sur tout le long dudit fagot 23 de conduits de communication 22.

À l'inverse, et comme indiqué précédemment, les moyens d'association structurelle 30 peuvent être formés par plusieurs tronçons élémentaires 32 formant plusieurs gaines spiralées flexibles 40 distinctes, indépendantes, de longueurs et de structure identiques ou différentes et disposées de manière discontinue le long du fagot 23 de conduits de communication 22. Dans ce cas de figure, deux gaines spiralées flexibles 40 successives sont, selon une réalisation avantageuse, espacées dans la direction longitudinale d'une distance maximale prédéterminée permettant d'annihiler sensiblement les effets de frottement dynamique entre le fagot 23 de conduits de communication 22 et la paroi périphérique 14 de la poche flexible 12.

À titre exemplatif et non limitatif, les moyens d'association structurelle 30 peuvent par exemple être formés d'une pluralité de gaines flexibles spiralées présentant chacune une longueur minimale de 10 centimètres et des distances de séparation pouvant s'étendre de 0 à environ 20 centimètres. Cela permet, d'une part, de limiter le nombre de gaines flexibles spiralées 40 à assembler autour du ou des fagots 23 de conduits de communication 22 et, d'autre part, de maintenir un niveau d'adhérence permettant de faire glisser le fagot 23 de conduits de communication 22 contre la paroi périphérique 14 de la poche flexible 12.

Il est également intéressant d'utiliser des gaines spiralées flexibles 40 présentant des spires 42 espacées les unes des autres d'une distance maximale d'environ 4 centimètres dans la direction longitudinale lorsque les gaines spiralées flexibles 40 sont en position autour du fagot 23 de conduits de communication 22. En effet, un tel agacement permet également de limiter les risques de contact de la paroi périphérique 14 avec les conduits de communication 22, entre deux spires 42 successives des gaines spiralées flexibles 40.

Chaque tronçon élémentaire 32 formé par une gaine spiralée flexible 40 présente deux parties extrêmes 46a, 46b et une partie médiane 48 disposée entre ces deux parties extrêmes 46a, 46b.

Selon une réalisation particulière, la gaine spiralée flexible 40 présente, d'une part, une portion médiane 48 enroulée autour de l'ensemble des portions à fagoter 22a du fagot 23 de conduits de communication 22 et, d'autre part, l'une et/ou l'autre des partie extrêmes 46a, 46b enroulées uniquement autour d'une portion à fagoter 22a de l'un des conduits de communication 22 formant le fagot 23 de conduits de communication 22.

Une telle réalisation présente, en effet, l'avantage de protéger la surface externe 22_{EXT} des conduits de communication 22 lorsque la gaine spiralée flexible 40 s'avère être tranchante au niveau de ses parties extrêmes 46a, 46b.

Selon une deuxième forme de réalisation illustrée par les figures 5a et 5b, les moyens d'association structurelle 30 sont formés par une gaine flexible ouverte 140.

Une telle gaine flexible ouverte 140 est commercialisée par la société METAFIX sous la dénomination « GAINE FLASH » et présente une section ouverte au niveau d'une ouverture longitudinale 142 afin de lui permettre de se déformer élastiquement en direction transversale - c'est-à-dire dans une direction perpendiculaire à la direction longitudinale.

Plus particulièrement, cette gaine flexible ouverte 140 peut fléchir en direction transversale afin de permettre l'introduction ou le retrait de portions à fagoter 22a de conduits de communication 22 et ainsi de constituer ou de défaire un fagot 23 de conduits de communication 22. La gaine flexible ouverte 140 est ainsi capable d'enserrer et de maintenir à proximité les unes des autres plusieurs portions à fagoter 22a appartenant à un ou plusieurs conduits de communication 22.

La gaine flexible ouverte 140 présente, en outre, un corps 144 pourvu d'une pluralité d'encoches 142 régulièrement réparties dans la direction longitudinale pour autoriser la flexion de la gaine flexible ouverte 140.

Selon les réalisations, la gaine flexible ouverte 140 peut présenter une longueur variable et s'étendre dans la direction longitudinale du ou des conduits communication lorsqu'elle se trouve en position d'utilisation.

Une telle gaine flexible ouverte 140 est à la fois modulaire et rapide à installer. En effet, d'une part, cette gaine flexible ouverte 140 présente un corps apte à se déformer élastiquement pour enserrer différentes dimensions de fagots 23 de conduits de communication 22 et, d'autre part, compte-tenu de la présence de l'ouverture longitudinale, il est possible d'enserrer rapidement les différentes portions à fagoter 22a constituant le fagot de conduits de communication 22.

En outre, la gaine flexible ouverte 140 est formée à partir d'un matériau présentant des coefficients de frottement statique et dynamique inférieurs à ceux des conduits de communications 20. À titre exemplatif et nullement limitatif, ladite gaine flexible ouverte 140 présente, selon une réalisation, une couche externe réalisée en polypropylène (PP) ou tout autre matériau analogue. De cette manière, lorsque la gaine flexible ouverte 140 est en position autour des portions à fagoter 22a du fagot 23 de conduits de communication 22, c'est elle qui entre majoritairement en contact avec la paroi périphérique 14 et qui assure donc un meilleur glissement du fagot 23 de conduits de communication 22.

Comme indiqué précédemment, les moyens d'association structurelle 30 peuvent alors être formé par un unique tronçon élémentaire 32 formant une unique gaine flexible ouverte 140 disposée de manière continue le long du fagot 23 de conduits de communication 22. C'est ce qu'illustre la figure 5b. Les risques d'adhérence du fagot 23 de conduits de communication 22 contre la paroi périphérique 14 de la poche flexible 12 sont ainsi maîtrisés, sur tout le long dudit fagot 23 de conduits de communication 22.

À l'inverse, et comme précédemment, les moyens d'association structurelle 30 peuvent être composés de plusieurs tronçons élémentaires 32 formés à partir de gaines flexibles ouvertes 140 distinctes, indépendantes, de longueurs et de structure identiques ou différentes et disposées de manière discontinue et éventuellement irrégulière le long du fagot 23 de conduits de communication 22. Dans ce cas de figure, deux gaines flexibles ouvertes 140 successives sont, selon une réalisation avantageuse, espacées dans la direction longitudinale d'une distance maximale prédéterminée permettant d'annihiler sensiblement les effets de frottement dynamique entre le fagot 23 de conduits de communication 22 et la paroi périphérique 14 de la poche flexible 12.

Selon une autre forme de réalisation encore (non représentée), les moyens d'association structurelle 30 peuvent être formés par une pluralité de bagues flexibles (non représentées).

Ces bagues flexibles présentent alors, selon une réalisation non limitative, une section ouverte au niveau d'une ouverture longitudinale afin de permettre leurs déformations élastiques en direction transversale.

Plus particulièrement, ces bagues flexibles peuvent fléchir en direction transversale afin de permettre l'introduction ou le retrait de portions à fagoter 22a de conduits de communication 22 et ainsi de constituer ou de défaire un fagot 23 de conduits de communication 22. Les bagues flexibles sont ainsi capable d'enserrer et de maintenir à proximité les unes des autres plusieurs portions à fagoter 22a appartenant à un ou plusieurs conduits de communication 22.

Les bagues flexibles présentent, en outre, un corps de longueur variable ou constante, pouvant par exemple être compris entre 0,5 et 20 centimètres.

En outre, les bagues flexibles sont formées à partir d'un ou plusieurs matériaux présentant des coefficients de frottement statique et dynamique inférieurs à ceux des conduits de communications 20. À titre exemplatif et nullement limitatif, les bagues flexibles présentent, selon une réalisation, une couche externe réalisée en polypropylène (PP) ou tout autre matériau analogue. De cette manière, lorsque les bagues flexibles 240 sont en position autour des portions à fagoter 22a du fagot 23 de conduits de communication 22, ces bagues flexibles qui entre majoritairement en contact avec la paroi périphérique 14 et qui assure donc un meilleur glissement du fagot 23 de conduits de communication 22.

Selon cette réalisation, les moyens d'association structurelle 30 sont formés par une pluralité de tronçons élémentaires 32 formés par une bague flexible et qui sont régulièrement ou irrégulièrement répartie le long du fagot 23 de conduits de communication 22. Dans ce cas de figure, deux bagues flexibles 240 successives sont, selon une réalisation avantageuse, espacées dans la direction longitudinale d'une distance maximale prédéterminée et, de préférence, inférieure à quelques centimètres. Il est ainsi possible d'annihiler sensiblement les effets de frottement dynamique entre le fagot 23 de conduits de communication 22 et la paroi périphérique 14 de la poche flexible 12.

Le procédé de conditionnement d'un ensemble unitaire stérile 10 selon l'invention est maintenant décrit en détail.

Il convient d'abord de disposer d'une poche flexible 10 présentant une paroi périphérique 14 définissant un espace interne stérile 14a ou, plus particulièrement, apte à être stérilisé dès lors que la poche flexible 10 aura été fermée hermétiquement.

Il convient également de disposer d'un ou plusieurs organes fonctionnels de type fluidique tels qu'évoqués précédemment et que l'un au moins de ces organes fonctionnels 30 présente un ou plusieurs conduits de communication 22 dotés d'une surface externe 22_{EXT} à plus forts coefficients de frottement statique et dynamique.

Le procédé de conditionnement selon l'invention comporte alors une étape consistant à agencer, autour des conduits de communication 22, les moyens d'association structurelle 30 précédemment décrits et à répartir ces moyens d'association structurelle 30 le long des portions à fagoter 22a des conduits de communication 22.

Il peut alors s'agir de gaines spiralées flexibles 40, de gaines flexibles ouvertes 140, d'une pluralité de bagues élastiques ou bien encore de tout autre moyen d'association structurelle 30 approprié, disposé le long du fagot 23 de conduits de communication 22 et présentant une surface externe à plus faibles coefficients de frottement statique et dynamique que ceux de la surface externe 22_{EXT} des conduits de communication 22.

Alors, dans la mesure où lesdits moyens d'association structurelle 30 présentent une surface externe 30_{EXT} à plus faibles coefficients de frottement statique et dynamique que ceux de la surface externe 22_{EXT} des conduits de communication 22, le fagot 23 du conduit de communication 22 ainsi constitué et, plus généralement, l'organe fonctionnel 20 peuvent être introduits dans la poche flexible 12, par glissement du fagot 23 du conduit de communication 22 vis-à-vis de la paroi périphérique 14 de la poche flexible 12. La poche est alors fermée hermétiquement (par soudure du film par exemple) et son contenu peut être stérilisé par irradiation notamment, sans risque de contamination extérieure grâce à la présence du connecteur aseptique 25.

Le procédé de déconditionnement d'un ensemble unitaire stérile 10 selon l'invention est maintenant décrit en détail.

Selon une réalisation, ce procédé de déconditionnement consiste à disposer d'un ensemble unitaire stérile 10 destiné à être utilisé dans le processus de fabrication d'un produit biopharmaceutique, tel que décrit précédemment.

L'ensemble unitaire flexible 10 dispose alors d'un ou plusieurs organes fonctionnels 30 agencés dans l'espace interne stérile 14a de la poche flexible 12 et comportant des moyens d'association structurelle 30.

Ces moyens d'association structurelle 30 sont, d'une part, agencés autour de conduits de communication 22 et, d'autre part, répartis le long de plusieurs portions à fagoter de ces conduits de communication 22, de sorte constituer le fagot 23 de conduits de communication 22. Par ailleurs, ces moyens d'association structurelle 30 présentent une surface externe à plus faibles coefficients de frottement statique et dynamique que ceux de la surface externe 22_{EXT} des conduits de communication 22.

Ainsi, pour assurer aisément le déconditionner de l'ensemble unitaire stérile 10 selon l'invention, il s'agit d'extraire l'organe fonctionnel 30 de la poche flexible 12, par glissement du fagot 23 de conduits de communication 22 vis-à-vis de la paroi périphérique 14 de ladite poche flexible 12. Puis d'enlever les moyens d'association structurelle 30 pour défaire les fagots 23 de conduits de communication 22 afin de pouvoir mettre en oeuvre le ou les organes fonctionnels 20.

## Revendications

1. Ensemble unitaire stérile (10) destiné à être utilisé dans le processus de fabrication d'un produit biopharmaceutique, comprenant une poche flexible (12) stérile dotée d'une paroi périphérique (14) définissant un espace interne stérile (14a) et un organe fonctionnel (20) de type fluidique au moins partiellement disposé dans l'espace interne stérile (14a) ;
dans lequel l'organe fonctionnel (20) comprend un ou plusieurs conduit(s) de communication (22) disposé(s) dans l'espace interne stérile (14a), apte(s) à assurer le transfert fluidique stérile de composants fluides et présentant une surface externe (22_{EXT}) à plus forts coefficients de frottement statique et dynamique ;
l'ensemble unitaire stérile (10) comprenant également des moyens d'association structurelle (30) disposés dans l'espace interne stérile (14a) et aptes à maintenir plusieurs portions à fagoter (22a) du ou des conduit(s) de communication (22) en position les unes à proximité des autres de manière à constituer un fagot (23) de conduit(s) de communication (22) formant une unité structurelle manipulable en tant que telle ;
**caractérisé en ce que** les moyens d'association structurelle (30) qui sont agencés autour et disposés le long du fagot (23) de conduit(s) de communication (22) présentent une surface externe (30_{EXT}) à plus faibles coefficients de frottement statique et dynamique, vis-à-vis de la paroi périphérique (14) de la poche flexible (12) que la surface externe (22_{EXT}) de l'un ou plusieurs conduit(s) de communication (22) de l'organe fonctionnel (20), de manière à faciliter la manipulation de l'organe fonctionnel (20) par glissement dudit fagot (23) de conduit(s) de communication (22), sur la paroi périphérique (14).

2. Ensemble unitaire stérile (10) selon la revendication 1, dans lequel les moyens d'association structurelle (30) présentent au moins un tronçon élémentaire (32) ouvert ou fermé et élastiquement déformable de sorte à enserrer les portions à fagoter (22a) du ou des conduit(s) de communication (22).

3. Ensemble unitaire stérile (10) selon la revendication 2, dans lequel les moyens d'association structurelle (30) présentent une pluralité de tronçons élémentaires (32) disposés de manière discontinue le long du fagot (23) de conduit(s) de communication (22), tel que deux tronçons élémentaires (32) successifs sont espacés dans la direction longitudinale du fagot (23) de conduit(s) de communication (22) d'une distance maximale prédéterminée de manière à sensiblement annihiler les effets de frottement dynamique entre le fagot (23) de conduit(s) de communication (22) et la paroi périphérique (14) de la poche flexible (12).

4. Ensemble unitaire stérile (10) selon l'une quelconque des revendications 1 à 3, dans lequel les moyens d'association structurelle (30) sont formés par une ou plusieurs gaine(s) spiralée(s) flexible(s) (40) présentant une succession de spires (42) réparties le long du fagot (23) de conduit(s) de communication (22).

5. Ensemble unitaire stérile (10) selon la revendication 4, dans lequel les moyens d'association structurelle (30) sont formés par une unique gaine spiralée flexible (40) disposée de manière continue le long du fagot (23) de conduit(s) de communication (22).

6. Ensemble unitaire stérile (10) selon la revendication 4, dans lequel les moyens d'association structurelle (30) sont formés par plusieurs gaines spiralées flexibles (40) (40) disposées de manière discontinue le long du fagot (23) de conduit(s) de communication (22), tel que deux gaines spiralées flexibles (40) successives sont espacées dans la direction longitudinale d'une distance maximale prédéterminée de manière à sensiblement annihiler les effets de frottement dynamique entre le fagot (23) de conduit(s) de communication (22) et la paroi périphérique (14) de la poche flexible (12).

7. Ensemble unitaire stérile (10) selon la revendication 6, dans lequel la distance maximale de séparation de deux gaines spiralées flexibles (40) successives est d'environ 20 centimètres.

8. Ensemble unitaire stérile (10) selon les revendications 6 ou 7, dans lequel chacune des gaines spiralées flexibles (40) présente, lorsqu'elle se trouve en position autour du fagot (23) de conduit(s) de communication (22), une longueur minimale d'environ 10 centimètres dans la direction longitudinale.

9. Ensemble unitaire stérile (10) selon l'une quelconque des revendications 6 à 8, dans lequel les gaines spiralées flexibles (40) présentent des caractéristiques structurelles identiques.

10. Ensemble unitaire stérile (10) selon l'une quelconque des revendications 4 à 9, dans lequel deux spires (42) successives de la ou des gaine(s) spiralée(s) flexible(s) (40) sont espacées dans la direction longitudinale d'une distance maximale d'environ 4 centimètres.

11. Ensemble unitaire stérile (10) selon l'une quelconque des revendications 4 à 10, dans lequel la ou l'une au moins des gaine(s) spiralée(s) flexible(s) (40) présente, d'une part, une portion médiane (48) enroulée autour de l'ensemble des portions à fagoter (22a) du fagot (23) de conduits de communication (22) et, d'autre part, au moins une partie extrême (46a, 46b) enroulée uniquement autour d'une portion à fagoter (22a) de l'un des conduits de communication (22) formant le fagot (23) de conduits de communication (22).

12. Ensemble unitaire stérile (10) selon l'une quelconque des revendications 1 à 11, comprenant plusieurs moyens d'association structurelle (30) distincts et indépendants, les uns étant aptes à maintenir plusieurs portions à fagoter (22a) du ou des conduit(s) de communication (22) de manière à constituer un premier fagot (23a) de conduit(s) de communication (22) manipulable en tant que tel, les autres étant aptes à maintenir plusieurs autres portions à fagoter (22a) du ou des conduit(s) de communication (22) de manière à constituer un second fagot (23b) de conduit(s) de communication (22) manipulable en tant que tel et indépendamment du premier fagot (23a) de conduit(s) de communication (22).

13. Procédé de conditionnement ou de déconditionnement d'un ensemble unitaire stérile (10) selon l'une quelconque des revendications 1 à 12, consistant à utiliser, pour constituer le fagot (23) de conduit(s) de communication (22), des moyens, d'association structurelle (30) présentant une surface externe (30_{EXT}) à plus faibles coefficients de frottement statique et dynamique
vis-à-vis de la paroi périphérique (14) de la poche flexible (12) que la surface externe (22_{EXT}) de l'un ou plusieurs conduits de communication (22) de l'organe fonctionel (20) de sorte à faciliter l'introduction ou l'extraction de l'organe fonctionnel (20) dans ou depuis la poche flexible (12) par glissement dudit fagot (23) de conduit(s) de communication (22) sur la paroi péripherique.

14. Procédé de conditionnement d'un ensemble unitaire stérile (10) destiné à être utilisé dans le processus de fabrication d'un produit biopharmaceutique, comprenant une pluralité d'étapes consistant à :
disposer d'une poche flexible (12) apte à être stérilisée et dotée d'une paroi périphérique (14) définissant un espace interne (14a);
disposer d'un organe fonctionnel (20) de type fluidique comprenant un ou plusieurs conduit(s) de communication (22) aptes, d'une part, à assurer le transfert fluidique stérile de composants fluides et présentant, d'autre part, une surface externe (22_{EXT}) à plus forts coefficients de frottement statique et dynamique ;
**caractérisé en ce qu'il** comporte une étape consistant à agencer autour et à répartir le long d'une ou plusieurs portion(s) à fagoter (22a) du ou des conduit(s) de communication (22) des moyens d'association structurelle (30) présentant une surface externe (30_{EXT}) à plus faibles coefficients de frottement statique et dynamique vis à vis de la paroi périphérique (14) de la poche flexible (12) que la surface externe (22_{EXT}) de l'un ou plusieurs conduit(s) de communication (22) de l'organe fonctionnel (20), de manière à constituer un fagot (23) de conduit(s) de communication (22),
**puis en ce qu'**il comporte une étape additionnelle consistant à introduire l'organe fonctionnel (20) dans la poche flexible (12), par glissement du fagot (23) de conduit(s) de communication (22) vis-à-vis de la paroi périphérique (14) de la poche flexible (12).

15. Procédé de conditionnement selon la revendication 14, dans lequel les moyens d'association structurelle (30) sont formés par une ou plusieurs gaine(s) spiralée(s) flexible(s) (40) présentant une succession de spires (42) réparties le long du fagot (23) de conduits de communication (22) tel que deux spires (42) successives sont espacées dans la direction longitudinale d'une distance maximale prédéterminée de manière à sensiblement annihiler les effets de frottement dynamique entre le fagot (23) de conduit(s) de communication (22) et la paroi périphérique (14) de la poche flexible (12).

16. Procédé de conditionnement selon la revendication 15, dans lequel la constitution du fagot (23) de conduits de communication (22) comprend plusieurs étapes consistant, d'abord, à enrouler l'une des parties extrêmes (46a) de la ou de l'une au moins des gaine(s) spiralée(s) flexible(s) (40) uniquement autour de l'une des portions à fagoter (22a) de l'un des conduits de communication (22), ensuite, à enrouler une partie médiane (48) de la ou de l'une au moins des gaine(s) spiralée(s) flexible(s) (40) autour de l'ensemble des conduits de communication (22) de sorte à constituer le fagot (23) de conduits de communication (22), et enfin, à enrouler l'autre des parties extrêmes (46b) de la ou de l'une au moins des gaine(s) spiralée(s) flexible(s) (40) uniquement autour de l'une des portions à fagoter (22a) de l'un des conduits de communication (22) formant le fagot (23) de conduits de communication (22).

17. Procédé de déconditionnement d'un ensemble unitaire stérile (10) destiné à être utilisé dans le processus de fabrication d'un produit biopharmaceutique, comprenant une pluralité d'étapes consistant à :
disposer d'une poche flexible (12) stérile dotée d'une paroi périphérique (14) définissant un espace interne stérile (14a) dans lequel est au moins partiellement agencé un organe fonctionnel (20) de type fluidique comprenant un ou plusieurs conduit(s) de communication (22) aptes à assurer le transfert fluidique stérile de composants fluides et présentant une surface externe (22_{EXT}).
**caractérisé en ce que** l'organe fonctionnel (20) comporte également des moyens d'association structurelle (30) qui, d'une part, sont agencés autour et répartis le long d'une ou plusieurs portion(s) à fagoter (22a) du ou des conduit(s) de communication (22) de sorte constituer un fagot (23) de conduits de communication (22) facilitant leur manipulation et qui, d'autre part, présentent une surface externe (30_{EXT}) à plus faibles coefficients de frottement statique et dynamique vis à vis de la paroi périphérique (14) de la poche flexible (12) que la surface externe (22_{EXT}) de l'un ou plusieurs conduit(s) de communication (22) de l'organe fonctionnel (20);
**et en ce que** le procédé de déconditionnement comporte une étape additionnelle consistant à extraire l'organe fonctionnel (20) de la poche flexible (12), par glissement du fagot (23) de conduit(s) de communication (22) vis-à-vis de la paroi périphérique (14) de ladite poche flexible (12).

## Patentansprüche

1. Sterile einheitliche Anordnung (10), die dazu bestimmt ist, in dem Verfahren zur Herstellung eines Biopharmazeutikums verwendet zu werden, umfassend einen sterilen flexiblen Beutel (12), der mit einer Umfangswand (14) versehen ist, die einen sterilen inneren Raum (14a) definiert, und ein Fluid-Funktionsglied (20), das mindestens teilweise im sterilen inneren Raum (14a) angeordnet ist,
wobei das Funktionsglied (20) eine oder mehrere Verbindungsleitungen (22) umfasst, die im sterilen inneren Raum (14a) angeordnet und geeignet sind, für den sterilen Fluidtransfer von fluiden Bestandteilen zu sorgen, und eine Außenfläche (22_{EXT}) mit einem höheren statischen und dynamischen Reibungskoeffizienten haben,
wobei die sterile einheitliche Anordnung (10) ferner Mittel (30) zur strukturellen Zuordnung umfasst, die im sterilen inneren Raum (14a) angeordnet und geeignet sind, mehrere zu bündelnde Abschnitte (22a) der Verbindungsleitung oder Verbindungsleitungen (22) nahe beieinander in Position zu halten, so dass sie ein Bündel (23) einer Verbindungsleitung (22) oder von Verbindungsleitungen (22) darstellen, das eine strukturelle Einheit bildet, die als solche gehandhabt werden kann,
**dadurch gekennzeichnet, dass** die Mittel (30) zur strukturellen Zuordnung, die um das Bündel (23) einer Verbindungsleitung (22) oder von Verbindungsleitungen (22) herum eingerichtet und an diesem entlang angeordnet sind, eine Außenfläche (30_{EXT}) mit einem gegenüber der Umfangswand (14) des flexiblen Beutels (12) geringeren statischen und dynamischen Reibungskoeffizienten als die Außenfläche (22_{EXT}) der einen oder mehreren Verbindungsleitungen (22) des Funktionsglieds (20) aufweisen, um die Handhabung des Funktionsglieds (20) durch Gleiten des Bündels (23) einer Verbindungsleitung (22) oder von Verbindungsleitungen (22) auf der Umfangswand (14) zu erleichtern.

2. Sterile einheitliche Anordnung (10) nach Anspruch 1, wobei die Mittel (30) zur strukturellen Zuordnung mindestens einen Elementarabschnitt (32) aufweisen, der offen oder geschlossen und elastisch deformierbar ist, um die zu bündelnden Abschnitte (22a) der Verbindungsleitung oder Verbindungsleitungen (22) einzuschließen.

3. Sterile einheitliche Anordnung (10) nach Anspruch 2, wobei die Mittel (30) zur strukturellen Zuordnung eine Vielzahl von Elementarabschnitten (32) aufweisen, die diskontinuierlich entlang dem Bündel (23) einer Verbindungsleitung (22) oder von Verbindungsleitungen (22) angeordnet sind, so dass zwei aufeinanderfolgende Elementarabschnitte (32) in der Längsrichtung des Bündels (23) einer Verbindungsleitung (22) oder von Verbindungsleitungen (22) mit einem vorbestimmten maximalen Abstand beabstandet sind, um die Auswirkungen dynamischer Reibung zwischen dem Bündel (23) einer Verbindungsleitung (22) oder von Verbindungsleitungen (22) und der Umfangswand (14) des flexiblen Beutels (12) im Wesentlichen zu eliminieren.

4. Sterile einheitliche Anordnung (10) nach einem der Ansprüche 1 bis 3, wobei die Mittel (30) zur strukturellen Zuordnung durch eine oder mehrere flexible gewendelte Hüllen (40) gebildet sind, die eine Abfolge von Windungen (42) aufweisen, die entlang dem Bündel (23) einer Verbindungsleitung (22) oder von Verbindungsleitungen (22) verteilt sind.

5. Sterile einheitliche Anordnung (10) nach Anspruch 4, wobei die Mittel (30) zur strukturellen Zuordnung durch eine einzige flexible gewendelte Hülle (40) gebildet sind, die durchgehend entlang dem Bündel (23) einer Verbindungsleitung (22) oder von Verbindungsleitungen (22) angeordnet ist.

6. Sterile einheitliche Anordnung (10) nach Anspruch 4, wobei die Mittel (30) zur strukturellen Zuordnung durch mehrere flexible gewendelte Hüllen (40) gebildet sind, die diskontinuierlich entlang dem Bündel (23) einer Verbindungsleitung (22) oder von Verbindungsleitungen (22) angeordnet sind, so dass zwei aufeinanderfolgende flexible gewendelte Hüllen (40) in der Längsrichtung mit einem vorbestimmten maximalen Abstand beabstandet sind, um die Auswirkungen dynamischer Reibung zwischen dem Bündel (23) einer Verbindungsleitung (22) oder von Verbindungsleitungen (22) und der Umfangswand (14) des flexiblen Beutels (12) im Wesentlichen zu eliminieren.

7. Sterile einheitliche Anordnung (10) nach Anspruch 6, wobei der maximale Trennungsabstand von zwei aufeinanderfolgenden flexiblen gewendelten Hüllen (40) ungefähr 20 Zentimeter beträgt.

8. Sterile einheitliche Anordnung (10) nach Anspruch 6 oder 7, wobei jede der flexiblen gewendelten Hüllen (40), wenn sie sich in Position um das Bündel (23) einer Verbindungsleitung (22) oder von Verbindungsleitungen (22) befindet, eine minimale Länge von ungefähr 10 Zentimetern in der Längsrichtung aufweist.

9. Sterile einheitliche Anordnung (10) nach einem der Ansprüche 6 bis 8, wobei die flexiblen gewendelten Hüllen (40) identische strukturelle Eigenschaften aufweisen.

10. Sterile einheitliche Anordnung (10) nach einem der Ansprüche 4 bis 9, wobei zwei aufeinanderfolgende Windungen (42) der flexiblen gewendelten Hülle oder Hüllen (40) in der Längsrichtung mit einem maximalen Abstand von ungefähr 4 Zentimetern beabstandet sind.

11. Sterile einheitliche Anordnung (10) nach einem der Ansprüche 4 bis 10, wobei die flexible gewendelte Hülle (40) oder mindestens eine der flexiblen gewendelten Hüllen (40) einerseits einen Mittelabschnitt (48), der um die Gesamtheit der zu bündelnden Abschnitte (22a) des Bündels (23) von Verbindungsleitungen (22) gerollt ist, und andererseits mindestens einen Endteil (46a, 46b) aufweist, der nur um einen zu bündelnden Abschnitt (22a) einer der Verbindungsleitungen (22), die das Bündel (23) von Verbindungsleitungen (22) bilden, gerollt ist.

12. Sterile einheitliche Anordnung (10) nach einem der Ansprüche 1 bis 11, umfassend mehrere einzelne und unabhängige Mittel (30) zur strukturellen Zuordnung, wobei die einen geeignet sind, mehrere zu bündelnde Abschnitte (22a) der Verbindungsleitung oder Verbindungsleitungen (22) so zu halten, dass sie ein erstes als solches handhabbares Bündel (23a) einer Verbindungsleitung oder von Verbindungsleitungen (22) darstellen, und die anderen geeignet sind, mehrere andere zu bündelnde Abschnitte (22a) der Verbindungsleitung oder Verbindungsleitungen (22) so zu halten, dass sie ein zweites als solches und unabhängig von dem ersten Bündel (23a) einer Verbindungsleitung (22) oder von Verbindungsleitungen (22) handhabbares Bündel (23b) einer Verbindungsleitung oder von Verbindungsleitungen (22) darstellen.

13. Verfahren zum Verpacken oder Auspacken einer sterilen einheitlichen Anordnung (10) nach einem der Ansprüche 1 bis 12, das zur Zusammenstellung des Bündels (23) einer Verbindungsleitung (22) oder von Verbindungsleitungen (22) aus der Verwendung von Mitteln (30) zur strukturellen Zuordnung besteht, die eine Außenfläche (30_{EXT}) mit einem gegenüber der Umfangswand (14) des flexiblen Beutels (12) geringeren statischen und dynamischen Reibungskoeffizienten als die Außenfläche (22_{EXT}) der einen oder mehreren Verbindungsleitungen (22) des Funktionsglieds (20) aufweisen, um das Einführen oder Herausziehen des Funktionsglieds (20) in den bzw. aus dem flexiblen Beutel (12) durch Gleiten des Bündels (23) einer Verbindungsleitung (22) oder von Verbindungsleitungen (22) auf der Umfangswand zu erleichtern.

14. Verfahren zum Verpacken einer sterilen einheitlichen Anordnung (10), die dazu bestimmt ist, in dem Verfahren zur Herstellung eines Biopharmazeutikums verwendet zu werden, umfassend eine Vielzahl von Schritten, die aus Folgendem bestehen:
Bereitstellen eines flexiblen Beutels (12), der sterilisiert werden kann und mit einer Umfangswand (14) versehen ist, die einen inneren Raum (14a) definiert,
Bereitstellen eines Fluid-Funktionsglieds (20), das eine oder mehrere Verbindungsleitungen (22) umfasst, die geeignet sind, einerseits für den sterilen Fluidtransfer von fluiden Bestandteilen zu sorgen, und andererseits eine Außenfläche (22_{EXT}) mit einem höheren statischen und dynamischen Reibungskoeffizienten aufweisen,
**dadurch gekennzeichnet, dass** es einen Schritt umfasst, der darin besteht, Mittel (30) zur strukturellen Zuordnung um einen oder mehrere zu bündelnde Abschnitte (22a) der Verbindungsleitung oder Verbindungsleitungen herum einzurichten und daran entlang zu verteilen, die eine Außenfläche (30_{EXT}) mit einem gegenüber der Umfangswand (14) des flexiblen Beutels (12) geringeren statischen und dynamischen Reibungskoeffizienten als die Außenfläche (22_{EXT}) einer oder mehrerer Verbindungsleitungen (22) des Funktionsglieds (20) aufweisen, um ein Bündel (23) einer Verbindungsleitung (22) oder von Verbindungsleitungen (22) zusammenzustellen,
und dadurch, dass es einen zusätzlichen Schritt umfasst, der daraus besteht, das Funktionsglied (20) durch Gleiten des Bündels (23) einer Verbindungsleitung (22) oder von Verbindungsleitungen (22) gegenüber der Umfangswand (14) des flexiblen Beutels (12) in den flexiblen Beutel (12) einzuführen.

15. Verfahren zum Verpacken nach Anspruch 14, wobei die Mittel (30) zur strukturellen Zuordnung durch eine oder mehrere flexible gewendelte Hüllen (40) gebildet sind, die eine Abfolge von Windungen (42) aufweisen, die entlang dem Bündel (23) von Verbindungsleitungen (22) verteilt sind, so dass zwei aufeinanderfolgende Windungen (42) in der Längsrichtung mit einem vorbestimmten maximalen Abstand beabstandet sind, um die Auswirkungen dynamischer Reibung zwischen dem Bündel (23) einer Verbindungsleitung (22) oder von Verbindungsleitungen (22) und der Umfangswand (14) des flexiblen Beutels (12) im Wesentlichen zu eliminieren.

16. Verfahren zum Verpacken nach Anspruch 15, wobei das Zusammenstellen des Bündels (23) von Verbindungsleitungen (22) mehrere Schritte umfasst, die aus Folgendem bestehen: zunächst Rollen des einen der Endteile (46a) der flexiblen gewendelten Hülle (40) oder der mindestens einen davon nur um den einen der zu bündelnden Abschnitte (22a) der einen der Verbindungsleitungen (22), sodann Rollen eines Mittelteils (48) der flexiblen gewendelten Hülle (40) oder der mindestens einen davon um die Gesamtheit der Verbindungsleitungen (22), um das Bündel (23) von Verbindungsleitungen (22) zusammenzustellen, und schließlich Rollen des anderen der Endteile (46b) der flexiblen gewendelten Hülle (40) oder der mindestens einen davon nur um den einen der zu bündelnden Abschnitte (22a) der einen der Verbindungsleitungen (22), wodurch das Bündel (23) von Verbindungsleitungen (22) gebildet wird.

17. Verfahren zum Auspacken einer sterilen einheitlichen Anordnung (10), die dazu bestimmt ist, in dem Verfahren zur Herstellung eines Biopharmazeutikums verwendet zu werden, umfassend eine Vielzahl von Schritten, die aus Folgendem bestehen:
Bereitstellen eines sterilen flexiblen Beutels (12), der mit einer Umfangswand (14) versehen ist, die einen sterilen inneren Raum (14a) definiert, in dem Fluid-Funktionsglied (20) mindestens teilweise angeordnet ist, das eine oder mehrere Verbindungsleitungen (22) umfasst, die geeignet sind, für den sterilen Fluidtransfer von fluiden Bestandteilen zu sorgen, und eine Außenfläche (22_{EXT}) aufweisen,
**dadurch gekennzeichnet, dass** das Funktionsglied (20) auch Mittel (30) zur strukturellen Zuordnung umfasst, die einerseits um einen oder mehrere zu bündelnde Abschnitte (22a) der Verbindungsleitung oder Verbindungsleitungen (22) herum eingerichtet und daran entlang verteilt sind, um ein Bündel (23) von Verbindungsleitungen (22) zusammenzustellen, das ihre Handhabung erleichtert, und die andererseits eine Außenfläche (30_{EXT}) mit einem gegenüber der Umfangswand (14) des flexiblen Beutels (12) geringeren statischen und dynamischen Reibungskoeffizienten als die Außenfläche (22_{EXT}) der einen oder mehreren Verbindungsleitungen (22) des Funktionsglieds (20) aufweisen,
und dass das Auspackverfahren einen zusätzlichen Schritt umfasst, der daraus besteht, das Funktionsglied (20) durch Gleiten des Bündels (23) einer Verbindungsleitung (22) oder von Verbindungsleitungen (22) gegenüber der Umfangswand (14) des flexiblen Beutels (12) aus dem flexiblen Beutel (12) herauszuziehen.

## Claims

1. Sterile individual set (10) intended for use in the process of manufacturing a biopharmaceutical product, comprising a sterile flexible bag (12) provided with a peripheral wall (14) defining a sterile internal space (14a) and a fluidic-type functional member (20) arranged at least partially within said sterile internal space (14a);
wherein the functional member (20) comprises one or more communication conduit(s) (22) arranged within the sterile internal space (14a), adapted to ensure the sterile fluid transfer of fluid components and having an external surface (22_{EXT}) with higher static and dynamic friction coefficients;
the sterile individual set (10) also comprising structural association means (30) arranged within the sterile internal space (14a) and adapted to hold a plurality of portions to be bundled (22a) of the communication conduits(s) (22) close to one another so as to constitute a bundle (23) of communication conduits (22) forming a structural unit that can be manipulated as such;
**characterized in that** the structural association means (30) arranged about and along the bundle (23) of communication conduits (22) have an external surface (30_{EXT}) with lower static and dynamic friction coefficients, relative to the peripheral wall (14) of the flexible bag (12), than the external surface (22_{EXT}) of the one or more communication conduit(s) (22) of the functional member (20), so as to facilitate manipulation of the functional member (20) by sliding said bundle (23) of communication conduits (22) on the peripheral wall (14).

2. Sterile individual set (10) according to claim 1, wherein the structural association means (30) comprise at least one open or closed component section (32) that is elastically deformable so as to clamp the portions to be bundled (22a) of the communication conduit(s) (22).

3. Sterile individual set (10) according to claim 2, wherein the structural association means (30) have a plurality of component sections (32) arranged discontinuously along the bundle (23) of communication conduits (22), such that two successive component sections (32) are spaced apart in the longitudinal direction of the bundle (23) of communication conduits (22) by a maximum predetermined distance so as to substantially negate the effects of dynamic friction between the bundle (23) of communication conduits (22) and the peripheral wall (14) of the flexible bag (12).

4. Sterile individual set (10) according to any one of claims 1 to 3, wherein the structural association means (30) are formed by one or more flexible spiral sheath(s) (40) having a succession of turns (42) distributed along the bundle (23) of communication conduits (22).

5. Sterile individual set (10) according to claim 4, wherein the structural association means (30) are formed by a single flexible spiral sheath (40) arranged continuously along the bundle (23) of communication conduits (22).

6. Sterile individual set (10) according to claim 4, wherein the structural association means (30) are formed by a plurality of flexible spiral sheaths (40) (40) arranged discontinuously along the bundle (23) of communication conduits (22), such that two successive flexible spiral sheaths (40) are spaced apart in the longitudinal direction by a predetermined maximum distance so as to substantially negate the effects of dynamic friction between the bundle (23) of communication conduits (22) and the peripheral wall (14) of the flexible bag (12).

7. Sterile individual set (10) according to claim 6, wherein the maximum distance separating two successive flexible spiral sheaths (40) is about 20 centimeters.

8. Sterile individual set (10) according to claim 6 or 7, wherein each of the flexible spiral sheaths (40) has, when in place around the bundle (23) of communication conduits (22), a minimum length of about 10 centimeters in the longitudinal direction.

9. Sterile individual set (10) according to any one of claims 6 to 8, wherein the flexible spiral sheaths (40) have identical structural characteristics.

10. Sterile individual set (10) according to any one of claims 4 to 9, wherein two successive turns (42) of the flexible spiral sheath(s) (40) are spaced apart in the longitudinal direction by a maximum distance of about 4 centimeters.

11. Sterile individual set (10) according to any one of claims 4 to 10, wherein the or the at least one flexible spiral sheath(s) (40) has (have), on the one hand, a middle portion (48) wound around the set of portions to be bundled (22a) of the bundle (23) of communication conduits (22), and on the other hand, at least one end portion (46a, 46b) wound around only a portion to be bundled (22a) of one of the communication conduits (22) forming the bundle (23) of communication conduits (22).

12. Sterile individual set (10) according to any one of claims 1 to 11, comprising a plurality of separate and independent structural association means (30), some being adapted to retain a plurality of portions to be bundled (22a) of the communication conduit(s) (22) so as to form a first bundle (23a) of communication conduits (22) that can be manipulated as such, the others being adapted to retain a plurality of other portions to be bundled (22a) of the communication conduit(s) (22) so as to form a second bundle (23b) of communication conduits (22) which can be manipulated as such and independently of the first bundle (23a) of communication conduits (22).

13. Method for packaging or unpackaging a sterile individual set (10) according to any one of claims 1 to 12, consisting of using, to form the bundle (23) of communication conduits (22), structural association means (30) having an external surface (30_{EXT}) with lower static and dynamic friction coefficients relative to the peripheral wall (14) of the flexible bag (12) than the external surface (22_{EXT}) of the one or more communication conduit(s) (22) of the functional member (20), so as to facilitate the insertion or removal of the functional member (20) into or from the flexible bag (12) by sliding said bundle (23) of communication conduits (22) on the peripheral wall.

14. Method for packaging a sterile individual set (10) intended for use in the process of manufacturing a biopharmaceutical product, comprising a plurality of steps consisting of:
providing a flexible bag (12) suitable for being sterilized and equipped with a peripheral wall (14) defining an internal space (14a);
providing a fluidic-type functional member (20) comprising one or more communication conduit(s) (22) which on the one hand are suitable for the sterile fluid transfer of fluid components and on the other hand have an external surface (22_{EXT}) with higher static and dynamic friction coefficients;
**characterized in that** it comprises a step of arranging around and distributing, along one or more portion(s) to be bundled (22a) of the communication conduit(s) (22), structural association means (30) having an external surface (30_{EXT}) with lower static and dynamic friction coefficients relative to the peripheral wall (14) of the flexible bag (12) than the external surface (22_{EXT}) of the one or more communication conduit(s) (22) of the functional member (20), so as to form a bundle (23) of communication conduits (22),
and **in that** it comprises an additional step of introducing the functional member (20) into the flexible bag (12) by sliding the bundle (23) of communication conduits (22) relative to the peripheral wall (14) of the flexible bag (12).

15. Method for packaging according to claim 14, wherein the structural association means (30) are formed by one or more flexible spiral sheath(s) (40) having a succession of turns (42) distributed along the bundle (23) of communication conduits (22) such that two successive turns (42) are spaced apart in the longitudinal direction by a predetermined maximum distance so as to substantially negate the effects of dynamic friction between the bundle (23) of communication conduits (22) and the peripheral wall (14) of the flexible bag (12).

16. Method for packaging according to claim 15, wherein the formation of the bundle (23) of communication conduits (22) comprises a plurality of steps consisting of: first winding one of the end portions (46a) of the or of the at least one flexible spiral sheath(s) (40) around only one of the portions to be bundled (22a) of one of the communication conduits (22), then winding a middle portion (48) of the or of the at least one flexible spiral sheath(s) (40) around the entire set of communication conduits (22) so as to form the bundle (23) of communication conduits (22), and lastly, winding the other end portion (46b) of the or of the at least one flexible spiral sheath(s) (40) around only one of the portions to be bundled (22a) of one of the communication conduits (22) forming the bundle (23) of communication conduits (22).

17. Method for unpackaging a sterile individual set (10) intended for use in the process of manufacturing a biopharmaceutical product, comprising a plurality of steps consisting of:
providing a sterile flexible bag (12) equipped with a peripheral wall (14) defining a sterile internal space (14a) within which a fluidic-type functional member (20) is at least partially arranged, said fluidic-type functional member (20) comprising one or more communication conduit(s) (22) suitable for the sterile fluid transfer of fluid components and having an external surface (22_{EXT});
**characterized in that** the functional member (20) also comprises structural association means (30) which, on the one hand, are arranged around and distributed along one or more portion(s) to be bundled (22a) of the communication conduit(s) (22) so as to form a bundle (23) of communication conduits (22) to facilitate their manipulation, and on the other hand, have an external surface (30_{EXT}) with lower static and dynamic friction coefficients relative to the peripheral wall (14) of the flexible bag (12) than the external surface (22_{EXT}) of the one or more communication conduit(s) (22) of the functional member (20);
and **in that** the unpackaging method comprises an additional step of removing the functional member (20) from the flexible bag (12) by sliding the bundle (23) of communication conduits (22) relative to the peripheral wall (14) of said flexible bag (12).
